(19) Europäisches Patentamt / European Patent Office / Office européen des brevets

(11) **EP 1 814 308 B1**

(12) **EUROPÄISCHE PATENTSCHRIFT**

(45) Veröffentlichungstag und Bekanntmachung des Hinweises auf die Patenterteilung:
**24.08.2011 Patentblatt 2011/34**

(51) Int Cl.:
*H04N 1/60* [(2006.01)]

(21) Anmeldenummer: **06024171.8**

(22) Anmeldetag: **22.11.2006**

(54) **Verfahren zur Farbkorrekturberechnung**

Method for calculating color correction

Procédé de calculation de correction de couleur

(84) Benannte Vertragsstaaten:
**DE FR GB**

(30) Priorität: **07.12.2005 DE 102005058415**

(43) Veröffentlichungstag der Anmeldung:
**01.08.2007 Patentblatt 2007/31**

(73) Patentinhaber: **Olympus Soft Imaging Solutions GmbH**
**48149 Münster (DE)**

(72) Erfinder: **Ströker, Dirk**
**48231 Warendorf (DE)**

(74) Vertreter: **Nunnenkamp, Jörg et al**
**Andrejewski - Honke**
**Patent- und Rechtsanwälte**
**An der Reichsbank 8**
**45127 Essen (DE)**

(56) Entgegenhaltungen:
| | |
|---|---|
| EP-A- 1 308 888 | EP-A1- 1 308 888 |
| US-A- 6 091 862 | US-A1- 2002 171 881 |
| US-A1- 2003 202 113 | US-A1- 2005 133 687 |
| US-A1- 2005 185 836 | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Ereindung betrifft ein Verfahren zur Farbdatenkorrektur bei der Farbdatenübermittlung von einer Aufnahmevorrichtung zu einer Ausgabeeinrichtung. Dabei ist der Aufnahmevorrichtung eine Rohdaten mit Farbinformationen versehene Farbfilterstruktur vorgeschaltet. Bei dem Verfahren werden die Rohdaten der Aufnahmevorrichtung zu unkorrigierten Zwischenfarbwerten mit gegenüber der Aufnahmevorrichtung verringerter Pixelanzahl umgewandelt. Dann werden die unkorrigierten Zwischenfarbwerte einer Farbkorrekturberechnung unterzogen und abschließend in korrigierte Zwischenfarbwerte für die Ausgabeeinrichtung umgewandelt.

Im Rahmen der digitalen Bildverarbeitung kommt dem vorgenannten Verfahren zur Farbdatenkomektur eine besondere Bedeutung zu. Denn üblicherweise werden digitale Farbbilder unter Verwendung roter, grüner und blauer Bildpunkte (RGB-Pixel) von einzelnen Aufnahmevorrichtungen zu ein oder mehreren Anzeige- bzw. Ausgabeeinrichtungen übermittelt. Das Gleiche gilt für bewegte digitale Bilder bzw. digitale Filme. In diesem Zusammenhang werden die Intensitäten von Rot, Grün und Blau in jedem Pixel gesteuert, um verschiedene Farben im Sinne der additiven Farbmischung zu erzeugen.

In der Display- oder Drucktechnik, also bei beispielsweise Monitoren als Anzeigevorrichtung bzw. Ausgabeeinrichtung, wird die Farbmischung erreicht, indem einzelne kleine, unterschiedlich gefärbte Punkte so dicht beieinander liegen, dass sich ihre Bilder auf der Netzhaut eines menschlichen Auges durch dessen begrenzte Auflösung überlagern. Klassische Aufnahmevorrichtungen wie Scanner oder auch Farb-CCD-Kameras nutzen manchmal für die Farbaufnahme drei CCD-Chips mit vorgeschalteten Farbfiltern, so dass für jede der drei Grundfarben RGB (Rot, Grün und Blau) ein separates CCD-Array zur Verfügung steht.

Weitaus gebräuchlicher sind jedoch Farb- bzw. Digitalkameras, welche mit einem einzigen CCD-Sensor arbeiten, der beispielsweise mit Hilfe von vorgeschalteten Streifen- oder Mosaikfiltern die einzelnen Farben erfasst. Denn die einzelnen Pixel bzw. Bildpunkte des CCD-Chips weisen in der Regel für sich genommen keine differierenden Farbselektivitäten auf, sondern nehmen üblicherweise Grauwerte und deren Intensität auf. D. h., die jeweilige FarbInformation wird an dieser Stelle durch ein entsprechend ausgestaltetes und vorgesetztes Farbfilter bzw. ein Mosaikfilter oder Streifenfilter zur Verfügung gestellt.

Die jeweiligen Aufnahmevorrichtungen, welche CCD-Sensoren nutzen, verändern ebenso wie Anzeigevorrichtungen, beispielsweise Monitore oder Drucker, die an sie jeweils übermittelte Farbe gerätespezifisch. D. h., die Farbe, nicht die Farbinformation ändert sich beispielsweise aufgrund des jeweils verwendeten Phosphors. Auch spielt die Beleuchtung eines abzubildenden Objektes eine Rolle. Während die maximale Empfindlichkeit des menschlichen Auges im grünen Wellenlängenbereich von ca. 555 nm liegt, sind beispielsweise Halbleiterkameras im nahen Infrarotgebiet bei Wellenlängen um ca. 700 nm bis 800 nm am sensitivsten. Dem wird in der Praxis durch eine grobe Farbkorrektur dadurch begegnet, dass ein an die Empfindlichkeit des Auges angepasster geeigneter Farbfilter der betreffenden Aufnahmevorrichtung vorgeschaltet wird.

Daneben kommen rechnerische Methoden der Bildverarbeitung zum Einsatz, um entsprechende Filterfunktionen digital darstellen zu können oder auch, um eine Farbdatenkorrektur vorzunehmen. Um einen möglichst korrekten bzw. der menschlichen Farbwahrnehmung angepassten und den relativen Farbabständen Rechnung tragenden Austausch von Farbdaten bei der Farbdaten übermittlung von der jeweiligen Aufnahmevorrichtung zu der Ausgabeeinrichtung zu gewährleisten, hat man sich in der Vergangenheit seitens einer Vielzahl von IT-Firmen auf eine gleichsam normierte Farbkorrekturberechnung verständigt, die von dem zugehörigen "international Color Consortium" (ICC) vorgegeben wird (nähere Informationen hierzu unter der intemetadresse www.color.org).

Bei der bekannten Farbkorrekturberechnung wird ein sog. Normfarbraum definiert. Um die damit einhergehenden Normfarbwerte zu erhalten, ist es erforderlich, einerseits beispielsweise die spezielle farbwahrnehmende Charakteristik einer CCD-Kamera als Aufnahmevorrichtung herstellerseitig zu erfassen und entsprechend zu berücksichtigen und andererseits die individuelle farbwiedergebende Charakteristik eines Monitors (der Phosphore) als Ausgabeeinrichtung ins Kalkül zu ziehen.

Der besagte Normfarbraum ist unabhängig von der Aufnahmevorrichtung und der Ausgabeeinrichtung, wobei lediglich die eingangsseitigen Farbdaten der Aufnahmevorrichtung und die ausgangsseitigen Farbdaten für die Ausgabeeinrichtung eine entsprechende gerätespezifische Transformation erfahren. Dadurch kann praktisch jedes beliebige Gerät als Aufnahmevorrichtung mit jedem beliebigen Gerät als Ausgabeeinrichtung kombiniert werden, weil immer auf den übereinstimmenden Normfarbraum zurückgegriffen wird. Die aufgenommenen Farbdaten werden einer Farbkorrekturberechnung unterzogen, um zu den Normfarbwerten des Normfarbraumes zu werden und diese Normfarbwerte werden wiederum einer Farbkorrekturberechnung unterworfen, um den Gerätespezifikationen der Ausgabeeinrichtung Rechnung zu tragen. Diese Vorgehensweise hat sich bewährt.

Da jedoch die beschriebene ICC-Methode oder auch eine andere Berechnungsart zur Farbkorrekturberechnung immer auf sämtlichen RGB-Farbwerten bzw. RGB-Farbpixeln der zugehörigen Aufnahmevorrichtung angewandt wird, ist die Verarbeitungsgeschwindigkeit oft langsam. Beispielsweise erzeugt ein CCD-Chip mit 1 Mio. Pixeln als Aufnahmevorrichtung folgerichtig auch 1 Mio. Farbpixel, die - entsprechend dem jeweils vorgeschalteten Farbfilter - ggf. nur Teilfarbinformationen enthalten und erst durch die Kamera mit nachgeschalteter Interpolation zu den 1 Mio. Farbpixeln umgewandelt werden. Diese Farbpixel werden nach der beschriebenen ICC-Methode der Farbkorrekturberechnung unterzogen. Dadurch ist es bisher nicht möglich, mit einer Aufnahmevorrichtung aufgenommene Farbdaten unter Berücksichtigung einer einigermaßen großen Auflösung der Aufnahmevorrichtung unmittelbar der beschriebenen Farbkorrekturberechnung zu unterziehen und auf einer zugehörigen Ausgabeeinrichtung nahezu verzögerungsfrei auszugeben. Tatsächlich muss an dieser Stelle wegen der erforderlichen Rechenzeit mit Verzögerungen zwischen Aufnahme und Wiedergabe gerechnet werden, die es beispielsweise nicht erlaubt, Zeilbewegungen oder Zeilwachstum im Zuge einer simplen Suche auf der Probe unmittelbar zu beobachten. Vielmehr ist es bisher erforderlich, zunächst ein Video mit ausreichender Bildrate aufzunehmen und dann auszuwerten.

Eine Methode zur Bildverarbeitung insbesondere von Videosequenzen kann außerdem der EP 1 308 888 A1 entnommen werden. Dort ist vorgesehen, dass eine Farbfilterstruktur den Bildelementen (Pixeln) einer Aufnahmeeinrichtung vorgeschaltet ist, wodurch die Rohdaten in einer RGB-Struktur vorliegen. Zur Beschleunigung der Datenverarbeitung schlägt diese Schrift vor, die Datenmenge zu reduzieren. Diese Reduktion erfolgt durch irreversible Eliminierung der Daten zu vorgegebenen Pixeln. Dies entspricht im Wesentlichen einer Verminderung der Pixelanzahl. Nachteilig daran ist, dass diese Methode zur Beschleunigung der Bilddatenverarbeltung auf Kosten der Auflösung erfolgt. Durch die Eliminierung zahlreicher Bilddaten wird die (räumliche) Auflösung der Bildinformationen reduziert. So bewirkt beispielsweise eine Reduktion der Pixel um den Faktor 3/4 eine Halbierung der Auflösung. Dieser Bildverarbeitungsschritt ist irreversibel, d. h. die einmal beseitigten Daten können auch bei nachgeschalteten Bildverarbeitungsalgorithmen nicht mehr wiederhergestellt werden. Darunter leidet letztlich die Bildqualität und hier möchte die Erfindung Abhilfe schaffen.

Der Erfindung liegt das technische Problem zugrunde, ein Verfahren zur Farbdatenkorrektur anzugeben, mit dessen Hilfe die Verarbeitungszeit deutlich verringert ist, so dass die Möglichkeit besteht, beispielsweise farbkorrigierte Bilder praktisch verzögerungsfrei bei gleichzeitig möglichst hoher Auflösung darstellen zu können.

Zur Lösung dieser technischen Problemstellung ist bei einem gattungsgemäßen Verfahren vorgesehen, dass jeder unkorrigierte Zwischenfarbwert zu einer einzelnen Farbfilterstruktur korrespondiert, indem die Rohdaten einer RGGB-Pixelgruppe zu einem Farbpixeltriplet als Zwischenfarbwert derart zusammengefasst werden, dass die beiden Grünpixel der Rohdaten eine Mittelung erfahren und die Rot- und Blauwerte jeweils beibehalten werden. Die korrigierten Zwischenfarbwerte bzw. die daraus durch Interpolation erhaltenen Zielfarbwerte weisen dabei üblicherweise eine Pixelanzahl auf, die der ursprünglichen Pixelanzahl entspricht.

Bei den Rohdaten handelt es sich um monochrome Daten, also Intensitäts-Grauwerte ohne Farbinformation. Um die Rohdaten mit einer Farbinformation auszurüsten, verfügt die Aufnahmevorrichtung über eine vorgeschaltete und die Rohdatenstruktur vorgebende Farbfilterstruktur. Bei dieser Farbfilterstruktur handelt es sich vorteilhaft um einen Mosaikfilter, welcher beispielsweise jedem einzelnen Pixel bzw. Bildpunkt einer CCD-Kamera als Aufnahmevorrichtung einen eigenen Farbfilter zuordnet. Dabei verfügen jeweils benachbarte Bildpunkte bzw. Pixel über unterschiedliche Farbfilter, beispielsweise Rot und Grün oder Grün und Blau usw.. D. h., der vorgeschaltete Filter bzw. die Farbfilterstruktur lässt nur einen Teil des optischen Spektrums durch. Somit wird nicht eine komplette Farbinformation aufgenommen, sondern nur ein Teil der vorliegenden Farbe.

Bewährt hat es sich in diesem Zusammenhang, wenn als Farbfilterstruktur eine sog. Bayer-Struktur eingesetzt wird, wenngleich natürlich auch völlig andere Farbfilterstrukturen als eine Bayer-Struktur zum Einsatz kommen können. Kennzeichnend für eine solche Bayer-Filterstruktur ist, dass jeweils vier Bildpunkte zusammengefasst werden, wobei bei zwei Bildpunkten bzw. Pixeln mit jeweils vorgeschaltetem Grünfilter gearbeitet wird, wohingegen die Farben Rot und Blau nur jeweils einfach erfasst werden. Dadurch trägt der Bayer-Filter bzw. die Bayer-Struktur des Farbfilters der besonderen Grünempfindlichkeit des menschlichen Auges Rechnung (vgl. ergänzend hierzu die DE 102 23 751 A1 bzw. die WO 2005/032147 A1, wo jeweils solche Bayer-Filter erläutert werden).

Anstelle eines Bayer-Filters kann auch ein CMYG-Filter (Cyan, Magenta, Yellow und Green) verwendet werden. In jedem Fall sammelt der jeweilige Bildpunkt bzw, der Pixel der CCD-Kamera im Beispielfall lediglich die Informationen eines definierten und durch den vorgeschalteten Filter vorgegebenen spektralen Intervalls. Bei diesem spektralen Intervall handelt es sich meistens um einen Ausschnitt aus dem Spektrum des sichtbaren Wellenlängenbereiches, wenngleich die Erfindung hierauf natürlich nicht eingeschränkt ist.

Die Rohdaten bzw. monochromen Rohdaten können mit verschiedenen bit-Tiefen aufgenommen werden, ohne dass sich an der insgesamt beobachteten Verarbeitungszeit der Farbdaten nennenswert etwas ändert. Beispielsweise wird mit monochromen 12 bit tiefen Intensitätsdaten gearbeitet, die ggf. auf 8 bit oder 16 bit konvertiert werden, indem entweder einzelne bits keine Berücksichtigung mehr finden oder zusätzliche (mit Null belegte) bits hinzutreten. In jedem Fall werden die besagten Rohdaten unter Berücksichtigung ihrer Position in der Rohdatenstruktur zu den unkorrigierten Zwischenfarbwerten umgewandelt.

Aus der Position der Rohdaten in der Rohdatenstruktur bzw. in dem Rohdatenraster wird rückgeschlossen, zu welcher Farbe die zugehörigen Intensitäts-Grauwerte korrespondieren. Die entsprechende Farbe wird von der Farbfilterstruktur vorgegeben, welche die Rohdatenstruktur bestimmt. Es hat sich bewährt, wenn jeweils vier benachbarte Rohdaten zu einem (einzigen) unkorrigierten Zwischenfarbwert umgewandelt werden. Selbstverständlich kann auch mit einer anderen jeweils vorgegebenen Anzahl an Rohdaten gearbeitet werden, die jeweils zu dem betreffenden unkorrigierten Zwischenfarbwert zusammengefasst werden. Üblicherweise korrespondiert jeder unkorrigierte Zwischenfarbwert jedoch zu einer einzelnen Bayer-Struktur, indem die Rohdaten einer RGGB-Pixelgruppe (vier Pixel mit beispielsweise jeweils 12 bit) zu einem Farbpixel R', G', B' mit 24 bit oder 48 bit zusammengefasst werden. In diesen Farbpixeln bzw. unkorrigierten Zwischenfarbwerten R', G', B' korrespondieren beispielsweise die ersten 8 bit zur Farbe Rot, die nächsten 8 bit zur Farbe Grün und die letzten 8 bit zur Farbe Blau, wenn eine 24 bit-Darstellung gewählt wird. Kommen dagegen 48 bit-Zwischenfarbwerte zum Einsatz, so korrespondiert jede Farbe RGB zu jeweils 16 bit. - Dabei versteht es sich, dass die zuvor 12 bit tiefen Rohdaten zunächst auf 8 bit oder 16 bit konvertiert worden sind.

Entscheidend ist der Umstand, dass die solchermaßen erzeugten unkorrigierten Zwischenfarbwerte eine verringerte Pixelanzahl gegenüber der Aufnahmevorrichtung aufweisen. Im Beispielfall eines CCD-Chips mit 10 x 10 Pixeln beträgt die Anzahl der Pixel (mit unkorrigierten Zwischenfarbwerten) also nur noch ein Viertel der zuvor insgesamten 100 Bildpunkte bzw. Pixel der Aufnahmevorrichtung, also 25 Pixel. Da erfindungsgemäß die unkorrigierten Zwischenfarbwerte mit gegenüber der Aufnahmevorrichtung deutlich verringerter Pixelanzahl (25 %) der Farbkorrekturberechnung unterzogen werden, kann die Rechenzeit ebenfalls auf nahezu ein Viertel minimiert werden, so dass im Ergebnis die Möglichkeit besteht, mit der Aufnahmevorrichtung erfasste Bilder der Farbkorrektur zu unterziehen und gleichzeitig praktisch verzögerungsfrei auf der Ausgabeeinrichtung anzuzeigen. Damit ist im Rahmen der Erfindung gemeint, dass die Farbkorrekturberechnung zu keiner bzw. einer vernachlässigbaren Verzögerung im Datenfluss führt. Dadurch können die mit der Aufnahmevorrichtung aufgenommenen Bilder im sog. "Live"-Modus farbkorrigiert und zugleich auf der Ausgabeeinrichtung angezeigt werden.

In diesem Zusammenhang spielt es für die Farbkorrekturberechnung und die benötigte Rechenzeit keine Rolle, ob die Rohdaten mit jeweils 8 bit oder 16 bit Tiefe je Farbinformation vorliegen und folgerichtig ist es ebenso unbeachtlich, ob die Zwischenfarbwerte eine 24 bit oder 48 bit Information tragen. Entscheidend ist einzig und allein der Umstand, dass das aus den unkorrigierten Zwischenfarbwerten zusammengesetzte Zwischenbild über die gegenüber der Aufnahmevorrichtung deutlich verringerte Pixelanzahl verfügt. Die sich daraus ergebende Möglichkeit der vollen Ausnutzung der Geschwindigkeit des "Live"-Modus' ist von besonderer Bedeutung, wenn beispielsweise lebende Zellproben in der Biologie unmittelbar untersucht werden sollen und vorgeschaltete zeitraubende Bildverarbeitungs- und Farbkorrekturroutinen stören würden bzw. nachteilig sind (beispielsweise bei einer Operation). Selbstverständlich ist die Erfindung auf derartige Anwendungsgebiete ausdrücklich nicht eingeschränkt.

Es hat sich bewährt, wenn die Rohdaten und/oder die unkorrigierten Zwischenfarbwerte vor der Farbkorrekturberechnung ergänzenden Korrekturalgorithmen beispielsweise zur Bildkorrektur unterzogen werden. Denkbar ist es hier, einen Weißabgleich vorzunehmen. Dieser kann so durchgeführt werden, dass ein transparenter und folglich "weißer" Bereich einer Probe als solcher definiert wird, in dem die zugehörigen Farbwerte R, G und B den gleichen Wert annehmen. Dies korrespondiert üblicherweise zur Farbe "Grau", so dass man hier auch von einem Grauabgleich reden kann. Jedenfalls wird die Farbe einer (Weißlicht-) Quelle durch die Gleichsetzung der Farbwerte R = G = B als Weiß definiert.

Darüber hinaus ist es denkbar, auf den Rohdaten und/oder unkorrigierten Zwischenfarbwerten eine Intensitätskorrektur der bereits angesprochenen (Weißlicht-) Quelle vorzunehmen. Beispielsweise empfiehlt sich eine Shading-Korrektur, welche etwaige Fehler bei der Bildausleuchtung bzw. eine ungleichmäßige Bildausleuchtung eines per Transmission aufgenommenen Objektes ausgleicht oder auch Abschattungen in den Randbereichen durch die Optik, sogenannte "Vignettierung", berücksichtigt. Üblicherweise wird hierzu eine sog. Grauwertsegmentierung mit automatischer Schwellwertbildung bei den Rohdaten durchgeführt, wie sie im Detail in dem Buch "Bildverarbeitung für Einsteiger", B. Neumann, Springer Verlag, 2004, Seite 135 ff. beschrieben wird.

Die durch die Farbkorrektur der unkorrigierten Zwischenfarbwerte am Ende erhaltenen korrigierten Zwischenfarbwerte werden zum Abschluss in eine vorgegebene Datenstruktur zurückgeschrieben, bei welcher es sich vorteilhaft um das bereits angesprochene Rohdatenraster bzw. die Rohdatenstruktur handelt. D. h, die korrigierten Zwischenfarbwerte mit ihren R, G und B-Farbwerten werden regelmäßig wiederum in z.B. die Bayer-Struktur zurückgeschrieben. Abschließend erfahren die korrigierten Zwischenfarbwerte durch Interpolation zwischen den einzelnen Farbwerten R, G und B in der Rohdatenstruktur bzw. der vorgegebenen Datenstruktur eine Änderung hinsichtlich ihrer Pixelanzahl und bilden am Ende die Zielfarbwerte. Dabei wird man meistens so arbeiten, dass zum Schluss die Pixelanzahl der Zielfarbwerte derjenigen der Aufnahmevorrichtung entspricht. Grundsätzlich kann hier auch mit einer anderen Pixelanzahl gearbeitet werden.

Gegenstand der Erfindung ist auch eine Vorrichtung zur Farbdatenkorrektur bei der Farbdatenübermittlung von einer Aufnahmevorrichtung zu einer Ausgabeeinrichtung, wie sie im Anspruch 10 beschrieben wird.

Im Folgenden wird die Erfindung anhand einer lediglich ein Ausführungsbeispiel darstellenden Zeichnung näher erläutert; es zeigen:

Fig. 1          einen CCD-Chip als Aufnahmevorrichtung mit vorgeschaltetem Farb-Mosaikfilter,

Fig. 2          einen Ausschnitt aus der Fig. 1 zur Bestimmung der Zwischenfarbwerte,

| Fig. 3 | den Gegenstand nach Fig. 1 mit den jeweiligen Zwischenfarbwerten, |
|---|---|
| Fig. 4 | das erfindungsgemäße Verfahren schematisch, |
| Fig. 5a bis 5d | das auf den Zielfarbwerten angewandte Interpolationsverfahren, |
| Fig. 6 | die Transmissionskurven des Farbmosaikfilters der Fig. 1 schematisch und |
| Fig. 7 und 8 | die erfindungsgemäße Vorrichtung in einer Übersicht. |

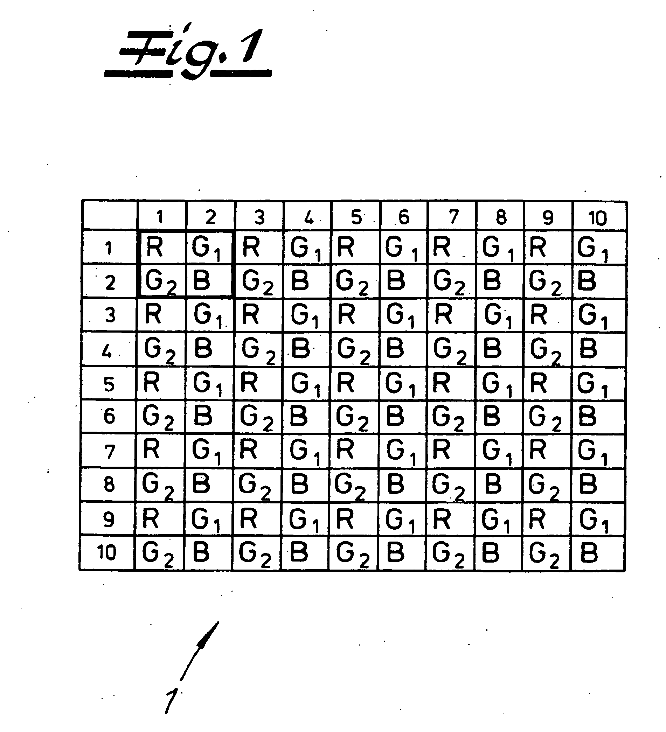

In den Figuren werden ein Verfahren sowie eine Vorrichtung zur Farbdatenkorrektur bei der Farbdatenübermittlung von einer Aufnahmevorrichtung 1 zu einer Ausgabeeinrichtung 2 beschrieben. Dazu werden zunächst Rohdaten $RG_1G_2B$ in Gestalt von monochromen Intensitäts-Grauwerten mit Hilfe der Aufnahmevorrichtung 1 entsprechend der Fig. 1 aufgenommen. Bei der Aufnahmevorrichtung 1 bzw. Bildquelle 1 handelt es sich ausweislich der Fig. 1 um einen CCD-Chip mit 10 x 10 bzw. 100 Pixeln im Beispielfall und vorgeschaltetem Mosaikfilter.

Der Mosaikfilter ist so angelegt, dass jeweils benachbarte Bildpunkte, beispielsweise diejenigen der Matrixpositionen 11 und 21 oder auch 34 und 35 jeweils unterschiedliche vorgesetzte Farbfilter aufweisen. So werden für den Bildpunkt an der Stelle 11 nur rote Anteile durchgelassen, so dass der entsprechende Bildpunkt eine rote Farbinformation R trägt. Vergleichbares gilt für die Bildpunkte an den Stellen 12 und 21, die jeweils grünes Licht G durchlassen. Dabei wird der grüne Bereich vorliegend über zwei Pixel bzw. Bildpunkte $G_1$ und $G_2$ erfasst, um der besonderen Empfindlichkeit des menschlichen Auges im grünen Spektralbereich Rechnung zu tragen. Der Pixel an der Stelle 22 ist schließlich für die Blauwerte B zuständig.

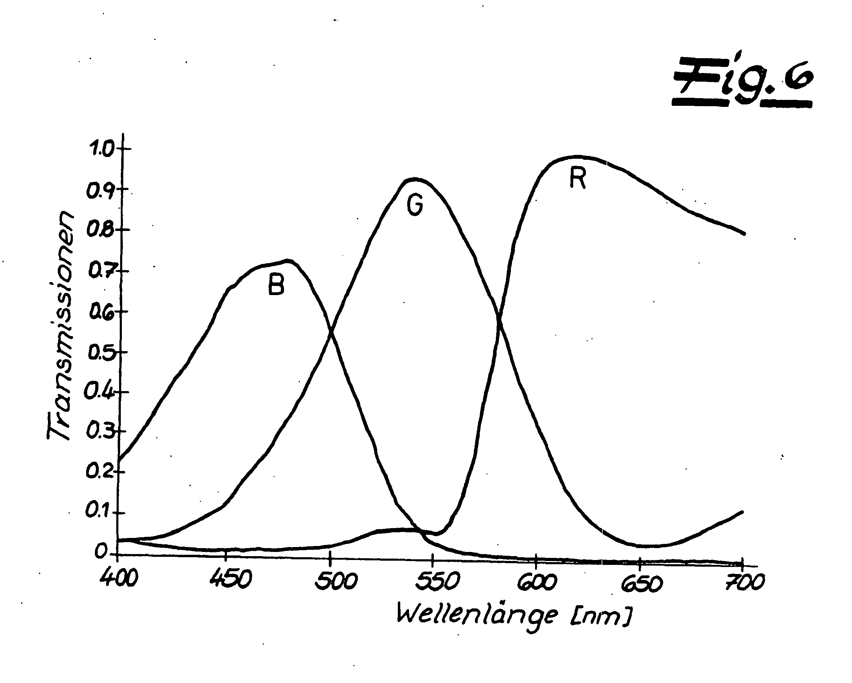

Man erkennt anhand der Fig. 1, dass sich der Mosaikfilter bzw. die sich daraus ergebende Farbfilterstruktur durch ein periodisches Muster aus vier Bildpunkten RGGB zusammensetzt. Bei dieser speziellen Farbfilterstruktur handelt es sich um eine sog. Bayer-Struktur und folglich bei dem vorgeschalteten Mosaikfilter um einen Bayer-Filter. Durch die Farbfilterstruktur erhalten die monochromen Rohdaten eine zugehörige Rohdatenstruktur $RG_1G_2B$. Denn die beispielsweise an der Matrixposition 11 ausgelesenen Intensitäts-Grauwerte gehören zur Farbe Rot R, wohingegen die Position 22 zur Farbe Blau B korrespondiert. Das wird im Rahmen des Ausführungsbeispiels jeweils so bewerkstelligt, dass die vorgeschalteten Farbfilter mit Transmissionskurven entsprechend der Fig. 6 ausgerüstet sind. Dadurch erreicht den hinter dem jeweiligen Farbfilter liegenden Pixel jeweils nur ein entsprechend den Durchlässigkeiten der Transmissionskurven ausgewählter selektiver Spektralbereich, vorliegend im sichtbaren Wellenlängenspektrum. Man erkennt anhand der Fig. 6, dass sich die jeweiligen Spektralbereiche RGB insgesamt überlappen und das gesamte sichtbare Spektrum von ca. 400 nm bis ca. 700 nm abdecken.

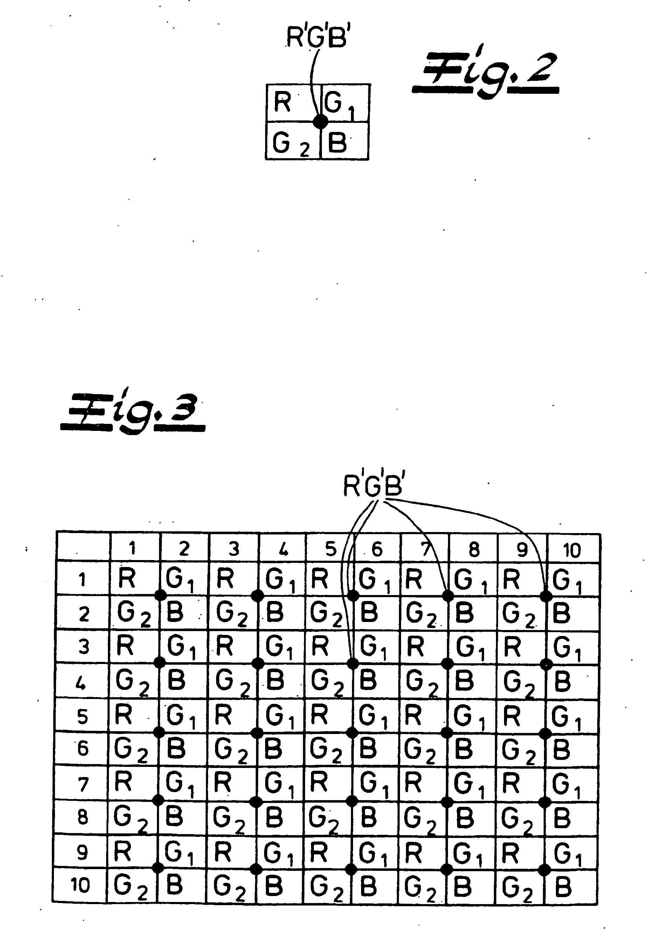

Die unter Berücksichtigung der Farbfilterstruktur bzw. Rohdatenstruktur von der Aufnahmevorrichtung 1 ausgelesenen Rohdaten $RG_1G_2B$ werden nun zu "unkorrigierten" Zwischenfarbwerten R', G', B' umgewandelt (vgl. Fig. 2, 3 und 4). Zuvor werden die Rohdaten $RG_1G_2B$ ergänzenden Korrekturalgorithmen, beispielsweise zur Bildkorrektur, unterzogen. Im Rahmen des Ausführungsbeispiels wird ein sog. Weißabgleich vorgenommen, indem an transparenten Stellen einer von einer Weißlichtquelle durchleuchteten durchsichtigen Probe die Werte für R, G und B gleichgesetzt werden, d. h., R = G = B. Darüber hinaus mag noch die einleitend beschriebene Shading-Korrektur vorgenommen werden, um Abweichungen der Weißlichtquelle von einer insgesamt homogenen Ausleuchtung zu berücksichtigen.

Im Anschluss an diese optionalen ergänzenden Korrekturalgorithmen werden die monochromen Rohdaten $RG_1G_2B$ bzw. die dazugehörigen Intensitäts-Grauwerte zu den bereits angesprochenen "unkorrigierten" Zwischenfarbwerten R', G', B' umgewandelt. Dazu wird das zuvor beschriebene Bayer-Muster aus den vier Bildpunkten $RG_1G_2B$ zu jeweils einem "unkorrigierten" Zwischenfarbwert bzw. Farbpixel R', G' und B' zusammengefasst. Das drücken die Fig. 2 und 3 aus. Hier erkennt man, dass der jeweilige $RG_1G_2B$-Pixelblock, also die Rohdaten, zu einem "unkorrigierten" Zwischenfarbwert R', G', B', umgewandelt werden, indem die beiden Grünpixel $G_1$ und $G_2$ eine Mittelung entsprechend

$$G' = (G_1 + G_2) / 2$$

erfahren und die Rot- und Blauwerte jeweils beibehalten werden. Pro jeweils vier Rohdatenpixeln RG1G2B wird ein Farbpixeltriplet erzeugt, also jeweils ein unkorrigierter Zwischenfarbwert R', G', B'. Dadurch liegt ein Zwischenbild mit einer verringerten Pixelanzahl gegenüber der Aufnahmevorrichtung 1 vor, deren Pixel die unkorrigierten Zwischenfarbwerte R', G', B' aufweist. Tatsächlich hat sich die Pixelanzahl von 100 für die Aufnahmevorrichtung 1 im Beispielfall auf 25 Farbpixel für die unkorrigierten Zwischenfarbwerte R', G', B' verringert, wie insbesondere die Fig. 3 deutlich macht.

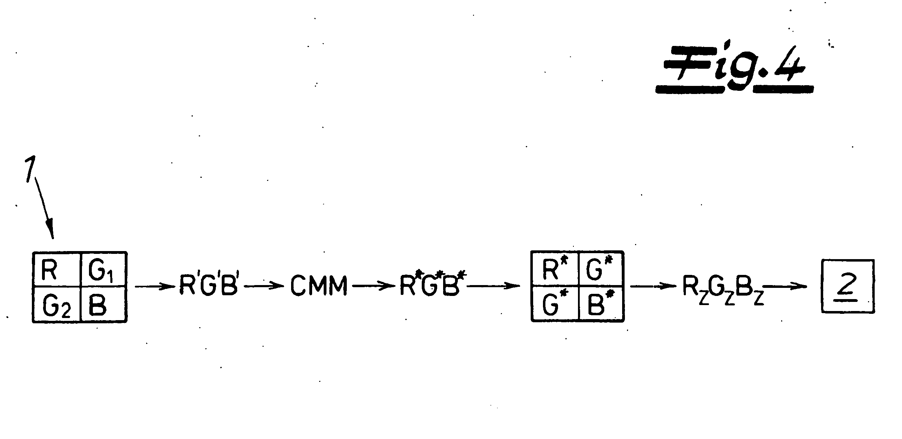

Die solchermaßen ermittelten unkorrigierten Zwischenfarbwerte R', G', B' des Zwischenbildes mit gegenüber der Aufnahmevorrichtung 1 verringerter Pixelanzahl werden anschließend der Farbkorrekturberechnung unterzogen, die in der Fig. 4 mit CMM (Color Management Module) gekennzeichnet ist. D. h., die Farbkorrekturberechnung findet im Beispielfall auf nur 25 % der Pixel der Aufnahmevorrichtung 1 statt, welches den erfindungsgemäß erreichten deutlichen Geschwindigkeitsvorteil bei der Verarbeitung bringt. Denn die CMM-Berechnung bzw. ICC-Farbkorrekturberechnung ist umfangreich und aufwendig. Dabei spielt es für die Rechenzeit praktisch keine Rolle, ob nun die monochromen Rohdaten $RG_1G_2B$ mit 8, 12 oder 16 bit Farbtiefe vorliegen und als Folge hiervon die unkorrigierten Zwischenfarbwerte R', G', B' 24 bit oder beispielsweise 48 bit umfassen. Es sollte betont werden, dass die ICC-Berechnung als Farbkorrektur für die unkorrigierten Zwischenfarbwerte R', G', B' nur eine Beispielmethode darstellt und selbstverständlich auch andere Vorgehensweisen zur Farbkorrekturberechnung umfasst werden.

Die unkorrigierten Zwischenfarbwerte R', G', B' bilden nach der Farbkorrekturberechnung korrigierte Zwischenfarbwerte R*, G*, B*, welche folglich farbkorrigierte Farbpixeltriplets darstellen. Deren Anzahl entspricht (zunächst) derjenigen der unkorrigierten Zwischenfarbwerte R', G', B' (vgl. Fig. 4). Um nun die Pixelanzahl der korrigierten Zwischenfarbwerte R*, G*, B* zu erhöhen, idealerweise auf wiederum 100 Pixel im Beispielfall bzw. entsprechend der Pixelanzahl der Aufnahmevorrichtung 1, wird ein anschließend im Detail noch zu beschreibender Interpolationsvorgang auf den korrigierten Zwischenfarbwerten R*, G*, B* vorgenommen.

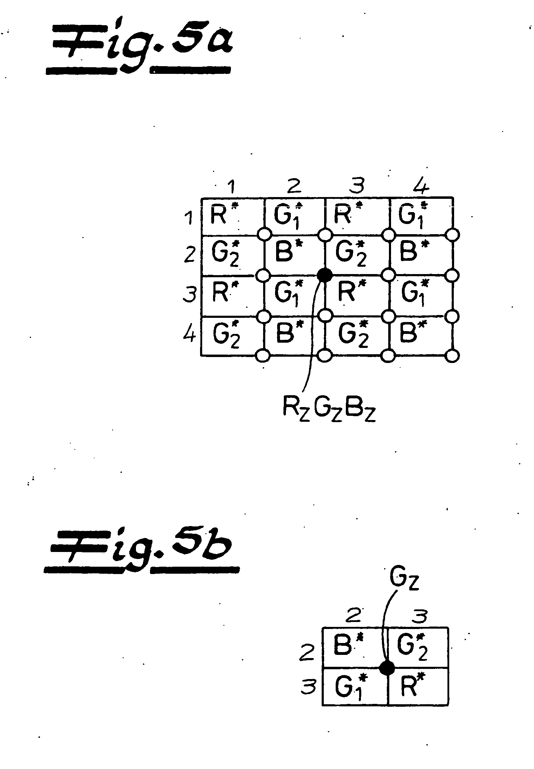

Zu diesem Zweck werden die durch die Farbkorrektur der unkorrigierten Zwischenfarbwerte R', G', B' erhaltenen korrigierten Zwischenfarbwerte R*, G*, B* zunächst in eine vorgegebene Datenstruktur, insbesondere die von der Farbfilterstruktur vorgegebene Rohdatenstruktur entsprechend der Fig. 1 zurückgeschrieben. Das ist in den Fig. 4 und 5a angedeutet. D. h., die farbkorrigierten Zwischenfarbwerte R*, G*, B* nehmen ihre gleichsam ursprüngliche Position im Rohdatenraster bzw. der Rohdatenstruktur wieder ein, welche von dem Farbfilter bzw. dessen Farbfilterstruktur vorgegeben wird. Somit findet sich an der Position 1 1 der korrigierte Rotwert R*, während die Position 2 2 den korrigierten Blauwert B* ausweist. Die Positionen 2 1 und 1 2 werden dagegen von jeweils gleichen Grünwerten G* belegt. Das lässt sich auf die zuvor vorgenommene Mittelung der ursprünglichen Grünwerte $G_1$ und $G_2$ bei der Umwandlung in die Zwischenfarbwerte R', G', B' zurückführen.

Um nun die beschriebene Mittelung durch Interpolation durchzuführen und die korrigierten Zwischenfarbwerte R*, G*, B* hinsichtlich ihrer Pixelanzahl zu ändern, wird im Beispielfall die sog. "9331"-Interpolations-Methode angewandt, wenngleich natürlich auch andere Methodiken denkbar sind. Die unkorrigierten Zwischenfarbwerte R', G', B' stehen mit einer Anzahl N' an Pixeln, die kleiner als die Zahl N der Pixel der Aufnahmevorrichtung 1 ist, d. h. N' < N, zur Verfügung. Das gilt vor der Interpolation folglich auch für die korrigierten Zwischenfarbwerte R*, G*, B*, deren Anzahl ebenfalls N' ist. Zum Abschluss der Interpolation beträgt die Anzahl der sich daraus ergebenden Zielfarbwerte $R_Z$, $G_Z$, $B_Z$ wiederum N und entspricht derjenigen der Aufnahmevorrichtung 1.

Bei der in den Fig. 5a bis 5d näher erläuterten Interpolationsmethode "9331" werden jeweils virtuelle Farbpixel zwischen jeweils vier Pixeln in der Bayer-Darstellung berechnet, und zwar für jede Position zwischen jeweils vier Pixeln. Dazu wird der Grünwert eines interpolierten Zielfarbwertes $G_Z$ anhand der Fig. 5b durch Mittlung berechnet, und zwar indem die (unterschiedlichen) Grünwerte an den Matrixpositionen 3 2 und 2 3 eine Mittlung erfahren (vgl. Fig. 5a). Als Folge hiervon steht der Grünwert $G_Z$ zur Verfügung ($G_Z = (G^*_1 + G^*_2)/2$).

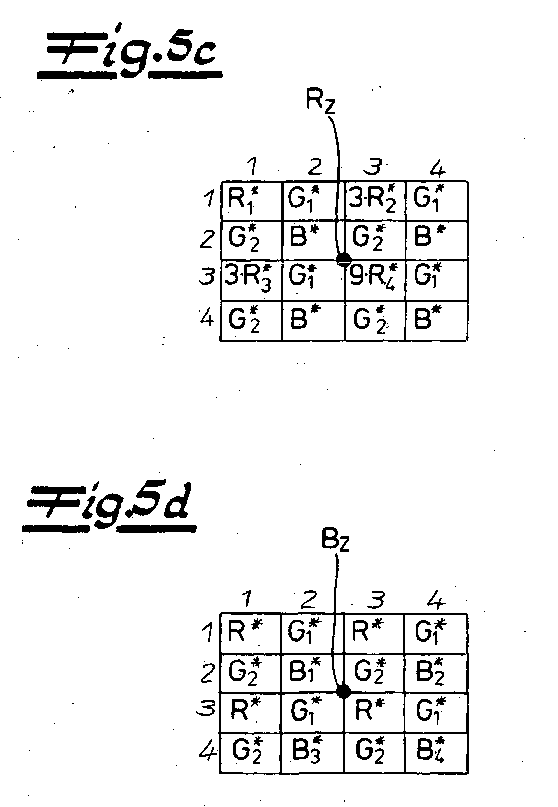

Für die Rotwertbestimmung nach Fig. 5c greift die Erfindung auf eine Gewichtung der Rotwerte an den Positionen 11, 31, 13 und 33 entsprechend der nachfolgenden Vorschrift zurück:

$$R_Z = (R^*_1 + 3 \times (R^*_2 + R^*_3) + 9 \times R^*_4) / 16.$$

Das ist in der Fig. 5c dargestellt. Schließlich erfolgt die Blauwertbestimmung entsprechend den Vorgaben in Fig. 5d, indem die Blauwerte an den Positionen 22, 42, 24 und 44 eine Gewichtung entsprechend

$$B_Z = (9 \times B^*_1 + 3 \times (B^*_3 + B^*_2) + B^*_4) / 16$$

erfahren. Als Ergebnis steht ein interpolierter Farbwert $R_Z$, $G_Z$, $B_Z$ an der herausgehobenen Position in der Fig. 5a zur Verfügung (geschlossener Kreis). Ebenso lassen sich für jede weitere Position (offene Kreise in Fig. 5a) interpolierte Zielfarbwerte $R_Z$, $G_Z$, $B_Z$ angeben. Am Ende dieser Prozedur ist die Anzahl der solchermaßen interpolierten Zielfarbwerte $R_Z$, $G_Z$, $B_Z$ der Anzahl N der Pixel der Aufnahmevorrichtung 1 gleich. Selbstverständlich könnte hier auch mit einer anderen Pixelanzahl für die interpolierten Zielfarbwerte $R_Z$, $G_Z$, $B_Z$ gearbeitet werden, falls dies erforderlich sein sollte.

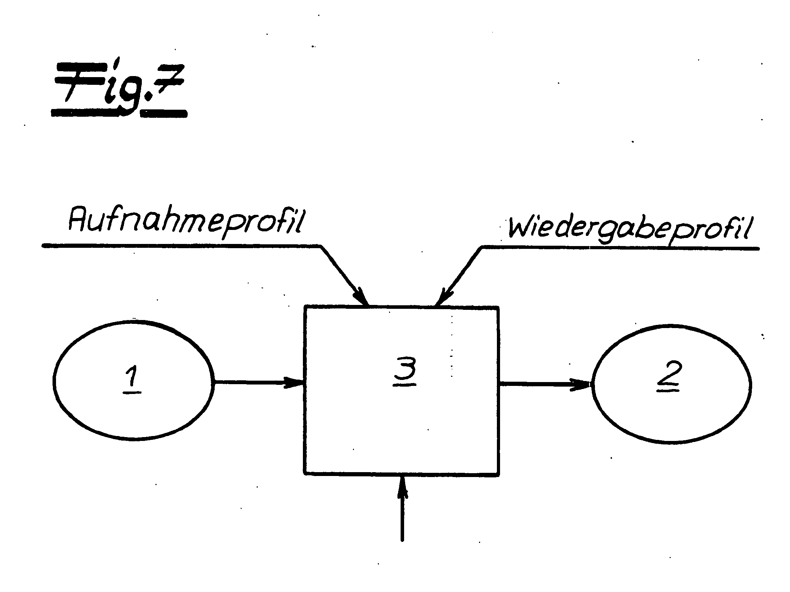

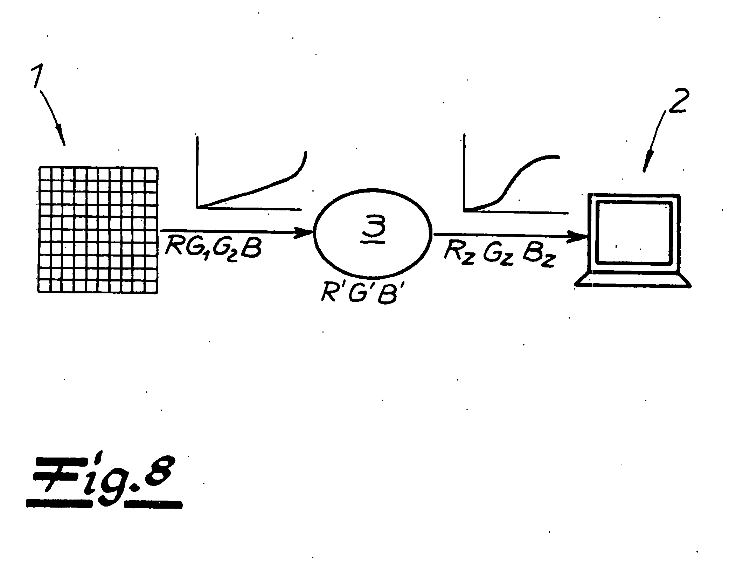

In den Fig. 7 und 8 ist die grundsätzliche Vorgehensweise der Erfindungslehre noch einmal in der Übersicht dargestellt. Man erkennt, dass zwischen der Aufnahmevorrichtung 1 und der Ausgabeeinrichtung 2 eine Steueranlage 3 zwischengeschaltet ist, welche die Farbdatenkorrektur respektive Farbkorrekturberechnung vornimmt. Dabei werden ein in der Fig. 8 angedeutetes Aufnahmeprofil der Aufnahmevorrichtung 1 und ein Wiedergabeprofil der Ausgabeeinrichtung 2 berücksichtigt.

Im Detail werden die monochromen Rohdaten R, $G_1$, $G_2$, B zu den unkorrigierten Zwischenfarbwerten R', G', B' in der Steueranlage 3 umgewandelt. Diese unkorrigierten Zwischenfarbwerte R', G', B' werden unter Berücksichtigung des durch eine Kurve dargestellten Aufnahmeprofils der Aufnahmevorrichtung 1 der Farbkorrekturberechnung unterzogen und schließlich in die korrigierten Zwischenfarbwerte R*, G*, B* umgewandelt, die durch Interpolation die interpolierten Zielfarbwerte $R_Z$, $G_Z$, $B_Z$ bilden, die zugleich dem Wiedergabeprofil für die Ausgabeeinrichtung 2 Rechnung tragen.

**Patentansprüche**

1. Verfahren zur Farbdatenkorrektur bei der Farbdatenübermittlung von einer Aufnahmevorrichtung (1) zu einer Ausgabeeinrichtung (2), mit einer vorgeschalteten und Rohdaten (R, $G_1$, $G_2$, B) mit Farbinformationen ausrüstenden Farbfilterstruktur, wonach die Rohdaten (R, $G_1$, $G_2$, B) der Aufnahmevorrichtung (1) zu unkorrigierten Zwischenfarbwerten (R', G', B') mit gegenüber der Aufnahmevorrichtung (1) verringerter Pixelanzahl (N'<N) umgewandelt werden, dann die unkorrigierten Zwischenfarbwerte (R', G', B') einer Farbkorrekturberechnung unterzogen werden und abschließend in korrigierte Zwischenfarbwerte (R*, G*, B*) für die Ausgabeeinrichtung (2) umgewandelt werden, **dadurch gekennzeichnet, dass** jeder unkorrigierte Zwischenfarbwert (R', G', B') zu einer einzelnen Farbfilterstruktur korrespondiert, in dem die Rohdaten (R, $G_1$, $G_2$, B) einer RGGB-Pixelgruppe zu einem Farbpixeltriplet (R', G', B') als Zwischenfarbwert (R', G', B') derart zusammengefasst werden, dass die beiden Grünpixel ($G_1$, $G_2$) der Rohdaten (R, $G_1$, $G_2$, B) eine Mittelung erfahren und die Rot- und Blauwerte jeweils beibehalten werden.

2. Verfahren nach Anspruch 1, **dadurch gekennzeichnet, dass** die Rohdaten (R, $G_1$, $G_2$, B) unter Berücksichtigung ihrer Position in einer Rohdatenstruktur zu den unkorrigierten Zwischenfarbwerten (R', G', B') umgewandelt werden.

3. Verfahren nach Anspruch 1 oder 2, **dadurch gekennzeichnet, dass** die Rohdaten (R, $G_1$, $G_2$, B) monochrom vorliegen.

4. Verfahren nach Anspruch 3, **dadurch gekennzeichnet, dass** als Farbfilterstruktur eine Bayer-Struktur eingesetzt wird.

5. Verfahren nach einem der Ansprüche 1 bis 4, **dadurch gekennzeichnet, dass** eine vorgegebene Anzahl an Rohdaten (R, $G_1$, $G_2$, B) jeweils zu einem unkorrigierten Zwischenfarbwert (R', G', B') zusammengefasst wird.

6. Verfahren nach einem der Ansprüche 1 bis 5, **dadurch gekennzeichnet, dass** die unkorrigierten Zwischenfarbwerte (R', G', B') ergänzenden Korrekturalgorithmen unterzogen werden, wobei die Korrekturalgorithmen vorzugweise einen Weißabgleich, einen Grauabgleich oder eine Shading-Korrektur umfassen.

7. Verfahren nach einem der Ansprüche 1 bis 6, **dadurch gekennzeichnet, dass** die durch die Farbkorrektur der unkorrigierten Zwischenfarbwerte (R', G', B') erhaltenen korrigierten Zwischenfarbwerte (R*, G*, B*) in eine vorgegebene Datenstruktur zurückgeschrieben werden, bei der es sich um die durch die Bit-Tiefe **gekennzeichnet**e Rohdatenstruktur handelt.

8. Verfahren nach Anspruch 7, **dadurch gekennzeichnet, dass** die Pixel des Zwischenbildes mit den korrigierten Zwischenfarbwerten (R*, G*, B*) per Interpolation in ein Zielbild mit entsprechend veränderter Pixelanzahl und den Zielfarbwerten ($R_Z$, $G_Z$, $B_Z$) transformiert werden.

9. Verfahren nach Anspruch 8, **dadurch gekennzeichnet, dass** üblicherweise die Pixelanzahl (N) der interpolierten Zielfarbwerte ($R_Z$, $G_Z$ $B_Z$) derjenigen der Aufnahmevorrichtung (1) entspricht.

10. Vorrichtung zur Fardatenkorrektur bei der Farbdatenübermittlung von einer Aufnahmevorrichtung (1) zu einer Ausgabeeinrichtung (2) mit einer Bildquelle als Aufnahmevorrichtung (1) mit einer vorgeschalteten und Rohdaten (R, $G_1$, $G_2$, B) mit Farbinformationen ausrüstenden Farbfilterstruktur sowie mit einer Steueranlage (3), wobei die Rohdaten (R, $G_1$, $G_2$, B) der Bildquelle (1) in der Steueranlage (3) zu unkorrigierten Zwischenfarbwerten (R', G', B') mit gegenüber der Aufnahmevorrichtung (1) verringerter Pixelanzahl (N' < N) umwandelbar sind, und wobei die unkorrigierten Zwischenfarbwerte (R', G', B') in der Steueranlage (3) einer Farbkorrekturberechnung unterzogen sowie in korrigierte Zwischenfarbwerte (R*, G*, B*) für die Ausgabeeinrichtung (2) umwandelbar sind, **dadurch gekennzeichnet, dass** die Steueranlage (3) weiterhin geeignet ist, um die Rohdaten (R, $G_1$, $G_2$, B) einer RGGB-Pixelgruppe zu einem Farbpixeltriplet (R', G', B') als Zwischenfarbwert (R', G', B') derart zusammenzufassen, dass die beiden Grünpixel ($G_1$, $G_2$) der Rohdaten (R, $G_1$, $G_2$, B) eine Mittelung erfahren und die Rot- und Blauwerte jeweils beibehalten werden, so dass jeder unkorrigierte Zwischenfarbwert (R', G', B') zu einer einzelnen Farbfilterstruktur korrespondiert.

**Claims**

1. Method for colour data correction during colour data transmission from a recording device (1) to an output device (2), with a colour filter structure connected upstream and supplying raw data (R, $G_1$, $G_2$, B) with colour information, whereupon the raw data (R, $G_1$, $G_2$, B) of the recording device (1) are converted to uncorrected intermediate colour values (R', G', B') with a reduced number of pixels (N'<N) compared to the recording device (1), then the uncorrected intermediate colour values (R', G', B') are subjected to a colour correction calculation and are finally converted to corrected intermediate colour values (R*, G*, B*) for the output device (2), **characterised in that** each uncorrected intermediate colour value (R', G', B') corresponds to an individual colour filter structure, **in that** the raw data (R, $G_1$, $G_2$, B) of an RGGB pixel group are combined to form a colour pixel triplet (R' G', B') as intermediate colour value (R', G', B') in such a manner that the two green pixels ($G_1$, $G_2$) of the raw data (R, $G_1$, $G_2$, B) undergo an averaging and the red and blue values are retained in each case.

2. Method according to Claim 1, **characterised in that** the raw data (R, $G_1$, $G_2$, B) are converted to the uncorrected intermediate colour values (R', G', B'), taking their position in a raw data structure into account.

3. Method according to Claim 1 or 2, **characterised in that** the raw data (R, $G_1$, $G_2$, B) are present monochromatically.

4. Method according to Claim 3, **characterised in that** a Bayer structure is used as colour filter structure.

5. Method according to any one of Claims 1 to 4, **characterised in that** a predetermined number of raw data (R, $G_1$, $G_2$, B) are combined to form an uncorrected intermediate colour value (R', G', B') in each case.

6. Method according to any one of Claims 1 to 5, **characterised in that** the uncorrected intermediate colour values (R', G', B') are subjected to supplementary correction algorithms, wherein the correction algorithms preferably comprise a white balance, a grey balance or a shading correction.

7. Method according to any one of Claims 1 to 6, **characterised in that** the corrected intermediate colour values (R*, G*, B*) obtained by colour correction of the uncorrected intermediate colour values (R', G', B') are written back into a predetermined data structure which is the raw data structure **characterised by** the bit depth.

8. Method according to Claim 7, **characterised in that** the pixels of the intermediate image are transformed with the corrected intermediate colour values (R*, G*, B*) by interpolation into a target image with correspondingly changed number of pixels and the target colour values ($R_Z$, $G_Z$, $B_Z$).

9. Method according to Claim 8, **characterised in that** the number of pixels (N) of the interpolated target colour values ($R_Z$, $G_Z$, $B_Z$) usually corresponds to that of the recording device (1).

10. Device for colour data correction during colour data transmission from a recording device (1) to an output device (2) with an image source as recording device (1) with a colour filter structure connected upstream and supplying raw data (R, $G_1$, $G_2$, B) with colour information, and also with a control system (3), wherein the raw data (R, $G_1$, $G_2$, B) of the image source (1) can be converted in the control system (3) to uncorrected intermediate colour values (R', G', B') with a reduced number of pixels (N'<N) compared to the recording device (1), and wherein the uncorrected intermediate colour values (R', G', B') are subjected to a colour correction calculation in the control system (3) and also can be converted into corrected intermediate colour values (R* G*, B*) for the output device (2), **characterised in that** the control system (3) is furthermore suitable to combine the raw data (R, G1, G2, B) of an RGGB pixel group to form a colour pixel triplet (R', G', B') as intermediate colour value in such a manner that the two green pixels ($G_1$, $G_2$) of the raw data (R, $G_1$, $G_2$, B) undergo an averaging and the red and blue values are retained in each case, so that each uncorrected intermediate colour value (R', G', B') corresponds to an individual colour filter structure.

**Revendications**

1. Procédé de correction de données de couleur lors de la transmission de données de couleur depuis un dispositif d'enregistrement (1) vers un dispositif d'affichage (2), avec une source d'image comme dispositif d'enregistrement (1) comportant une structure de filtre de couleurs branchée en amont et équipant les données brutes (R, $G_1$, $G_2$, B) avec des informations de couleur, après quoi les données brutes (R, $G_1$, $G_2$, B) du dispositif d'enregistrement (1) sont converties en valeurs intermédiaires de couleur (R', G', B') non corrigées avec un nombre de pixels inférieur (N'<N) par rapport au dispositif d'enregistrement (1), puis les valeurs intermédiaires de couleur non corrigées (R', G', B') sont soumises à un calcul de correction de couleur et finalement converties en valeurs intermédiaires de couleur corrigées (R', G', B') destinées au dispositif d'affichage (2), **caractérisé en ce que** chaque valeur intermédiaire de couleur non corrigée (R', G', B') correspond à une structure de filtre de couleurs individuelle, dans laquelle les données brutes (R, $G_1$, $G_2$, B) d'un groupe de pixels RGGB sont regroupées en un triplet de pixels de couleur (R', G', B') comme valeur de couleur intermédiaire (R*, G*, B*) de telle sorte que les deux pixels verts ($G_1$, $G_2$) des données brutes (R, $G_1$, $G_2$, B) subissent un calcul de moyenne et les valeurs rouge et bleue soient respectivement conservées.

2. Procédé selon la revendication 1, **caractérisé en ce que** les données brutes (R, $G_1$, $G_2$, B) sont converties en tenant compte de leur position dans une structure de données brutes en valeurs intermédiaires de couleur non corrigées (R', G', B').

3. Procédé selon la revendication 1 ou 2, **caractérisé en ce que** les données brutes (R, $G_1$, $G_2$, B) se présentent sous forme monochrome.

4. Procédé selon la revendication 3, **caractérisé en ce que** une structure de Bayer est employée comme structure de filtre de couleurs.

5. Procédé selon une des revendications 1 à 4, **caractérisé en ce que** un nombre prescrit de données brutes (R, $G_1$, $G_2$, B) est respectivement regroupé en une valeur intermédiaire de couleur non corrigée (R', G', B').

6. Procédé selon une des revendications 1 à 5, **caractérisé en ce que** les valeurs intermédiaires de couleur non corrigées (R', G', B') sont soumises à des algorithmes de correction complémentaires, dans lequel les algorithmes de correction comprennent de préférence un réglage du blanc, un réglage du gris ou une correction d'ombrage.

7. Procédé selon une des revendications 1 à 6, **caractérisé en ce que** les valeurs de couleur intermédiaire (R*, G*, B*) corrigées obtenues par la correction de couleur des valeurs intermédiaires de couleur non corrigées (R', G', B') sont réécrites dans une structure de données prescrite, dans laquelle il s'agit d'une structure de données brutes **caractérisée par** la profondeur binaire.

8. Procédé selon la revendication 7, **caractérisé en ce que** les pixels de l'image intermédiaire sont transformés avec les valeurs intermédiaires de couleur corrigées (R*, G*, B*) par interpolation dans une image cible avec un nombre de pixels modifié de manière correspondante et les valeurs intermédiaires de couleur ($R_Z$, $G_Z$, $B_Z$).

9. Procédé selon la revendication 8, **caractérisé en ce que** habituellement le nombre de pixels (N) des valeurs intermédiaires de couleur interpolées ($R_Z$, $G_Z$, $B_Z$) correspondent à celles du dispositif d'enregistrement (1).

10. Dispositif de correction de données de couleur lors de la transmission de données de couleur depuis un dispositif d'enregistrement (1) vers un dispositif d'affichage (2) avec une source d'image comme dispositif d'enregistrement (1) comportant une structure de filtre de couleurs branchée en amont et équipant les données brutes (R, $G_1$, $G_2$, B) avec des informations de couleur ainsi qu'une installation de commande (3), dans lequel
les données brutes (R, $G_1$, $G_2$, B) de la source d'image (1) dans l'installation de commande (3) peuvent être converties en valeurs intermédiaires de couleur non corrigées (R', G', B') avec un nombre de pixels inférieur (N'<N) par rapport au dispositif d'enregistrement (1), et dans lequel
les valeurs intermédiaires de couleur non corrigées (R', G', B') dans l'installation de commande (3) sont soumises à un calcul de correction de couleur ainsi que peuvent être converties en valeurs intermédiaires de couleur corrigées (R*, G*, B*) destinées au dispositif d'affichage (2),
**caractérisé en ce que**
l'installation de commande (3) est en outre appropriée pour regrouper les données brutes (R, $G_1$, $G_2$, B) d'un groupe de pixels RGGB en un triplet de pixels de couleur (R', G', B') comme valeur intermédiaire de couleur (R', G', B') de telle sorte que les deux pixels verts ($G_1$, $G_2$) des données brutes (R, $G_1$, $G_2$, B) subissent un calcul de moyenne et les valeurs rouge et bleue soient respectivement conservées, de telle sorte que chaque valeur intermédiaire de couleur non corrigée (R', G', B') corresponde à une structure de filtre de couleurs individuelle.

## Fig.1

|    | 1 | 2 | 3 | 4 | 5 | 6 | 7 | 8 | 9 | 10 |
|----|---|---|---|---|---|---|---|---|---|----|
| 1  | R | $G_1$ | R | $G_1$ | R | $G_1$ | R | $G_1$ | R | $G_1$ |
| 2  | $G_2$ | B | $G_2$ | B | $G_2$ | B | $G_2$ | B | $G_2$ | B |
| 3  | R | $G_1$ | R | $G_1$ | R | $G_1$ | R | $G_1$ | R | $G_1$ |
| 4  | $G_2$ | B | $G_2$ | B | $G_2$ | B | $G_2$ | B | $G_2$ | B |
| 5  | R | $G_1$ | R | $G_1$ | R | $G_1$ | R | $G_1$ | R | $G_1$ |
| 6  | $G_2$ | B | $G_2$ | B | $G_2$ | B | $G_2$ | B | $G_2$ | B |
| 7  | R | $G_1$ | R | $G_1$ | R | $G_1$ | R | $G_1$ | R | $G_1$ |
| 8  | $G_2$ | B | $G_2$ | B | $G_2$ | B | $G_2$ | B | $G_2$ | B |
| 9  | R | $G_1$ | R | $G_1$ | R | $G_1$ | R | $G_1$ | R | $G_1$ |
| 10 | $G_2$ | B | $G_2$ | B | $G_2$ | B | $G_2$ | B | $G_2$ | B |

1

R'G'B'

*Fig.2*

*Fig.3*

R'G'B'

| | 1 | 2 | 3 | 4 | 5 | 6 | 7 | 8 | 9 | 10 |
|----|----|----|----|----|----|----|----|----|----|----|
| 1 | R | $G_1$ | R | $G_1$ | R | $G_1$ | R | $G_1$ | R | $G_1$ |
| 2 | $G_2$ | B | $G_2$ | B | $G_2$ | B | $G_2$ | B | $G_2$ | B |
| 3 | R | $G_1$ | R | $G_1$ | R | $G_1$ | R | $G_1$ | R | $G_1$ |
| 4 | $G_2$ | B | $G_2$ | B | $G_2$ | B | $G_2$ | B | $G_2$ | B |
| 5 | R | $G_1$ | R | $G_1$ | R | $G_1$ | R | $G_1$ | R | $G_1$ |
| 6 | $G_2$ | B | $G_2$ | B | $G_2$ | B | $G_2$ | B | $G_2$ | B |
| 7 | R | $G_1$ | R | $G_1$ | R | $G_1$ | R | $G_1$ | R | $G_1$ |
| 8 | $G_2$ | B | $G_2$ | B | $G_2$ | B | $G_2$ | B | $G_2$ | B |
| 9 | R | $G_1$ | R | $G_1$ | R | $G_1$ | R | $G_1$ | R | $G_1$ |
| 10 | $G_2$ | B | $G_2$ | B | $G_2$ | B | $G_2$ | B | $G_2$ | B |

EP 1 814 308 B1

**Fig.4**

R | G₁
G₂ | B → R'G'B' → CMM → R*G*B* → R* | G*  → R_Z G_Z B_Z → 2
                                    G* | B*

$$\boxed{\begin{array}{c|c} R & G_1 \\ \hline G_2 & B \end{array}} \rightarrow R'G'B' \rightarrow CMM \rightarrow R^*G^*B^* \rightarrow \boxed{\begin{array}{c|c} R^* & G^* \\ \hline G^* & B^* \end{array}} \rightarrow R_Z G_Z B_Z \rightarrow \boxed{\underline{2}}$$

# Fig.5a

$R_Z G_Z B_Z$

# Fig.5b

$G_Z$

## Fig.5c

$R_Z$

|   | 1 | 2 | 3 | 4 |
|---|---|---|---|---|
| 1 | $R_1^*$ | $G_1^*$ | $3 \cdot R_2^*$ | $G_1^*$ |
| 2 | $G_2^*$ | $B^*$ | $G_2^*$ | $B^*$ |
| 3 | $3 \cdot R_3^*$ | $G_1^*$ | $9 \cdot R_4^*$ | $G_1^*$ |
| 4 | $G_2^*$ | $B^*$ | $G_2^*$ | $B^*$ |

## Fig.5d

$B_Z$

|   | 1 | 2 | 3 | 4 |
|---|---|---|---|---|
| 1 | $R^*$ | $G_1^*$ | $R^*$ | $G_1^*$ |
| 2 | $G_2^*$ | $B_1^*$ | $G_2^*$ | $B_2^*$ |
| 3 | $R^*$ | $G_1^*$ | $R^*$ | $G_1^*$ |
| 4 | $G_2^*$ | $B_3^*$ | $G_2^*$ | $B_4^*$ |

Fig. 6

# Fig.7

Aufnahmeprofil                    Wiedergabeprofil

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1308888 A1
- DE 10223751 A1
- WO 2005032147 A1

### In der Beschreibung aufgeführte Nicht-Patentliteratur

- **B. NEUMANN.** Bildverarbeitung für Einsteiger. Springer Verlag, 2004, 135 ff